# EUROPÄISCHE PATENTANMELDUNG

(11) **EP 1 795 792 A2**
(43) Veröffentlichungstag der Anmeldung: **13.06.2007**
(21) Anmeldenummer: 06021823.7
(22) Anmeldetag: 18.10.2006
(51) Int. Cl.: F16L 3/10

(54) **Rohrschelle**

(30) Priorität: 07.12.2005 DE 102005058390
(71) Anmelder: fischerwerke Artur Fischer GmbH & Co. KG, 72178 Waldachtal (DE)
(72) Erfinder: Schulte, Helmut, 58507 Lüdenscheid (DE)
(74) Vertreter: Suchy, Ulrich Johannes

(57) **Zusammenfassung**

Die Erfindung betrifft eine Rohrschelle (1). Um die Rohrschelle (1) provisorisch ohne Werkzeug schließen zu können schlägt die Erfindung vor, ein nach außen stehendes Ende (6) eines Schellenkörpers (2) mit einem außen offenen Schlitz (8) und das andere, ebenfalls nach außen stehende Ende (7) des Schellenkörpers (2) mit einem Schraubenloch zu versehen, in das eine Schraube (9) eingeschraubt und nach außen schwenkbar gehalten ist. Beim Schließen der Rohrschelle (1) schwenkt die Schraube (9) nach außen, so dass der Schraubenkopf (10) außen am einen Ende (6) des Schellenkörpers (2) vorbeitritt und die Schraube (9) anschließend in den Schlitz (8) eintritt.

## Beschreibung

Die Erfindung betrifft eine Rohrschelle mit den Merkmalen des Oberbegriffs des Anspruchs 1.

Die EP 0 975 908 B1 offenbart eine Rohrschelle mit einem ringförmigen Schellenkörper. Der Schellenkörper der bekannten Rohrschelle weist zwei halbkreisförmige Blechstreifen auf, die an einem Ende ineinander eingehängt und dadurch gelenkig miteinander verbunden sind. Es ist allerdings auch eine einstückige Ausbildung des Schellenkörpers möglich, der durch insbesondere elastische Verformung öffenbar ist. Weder die Herstellung aus Blech oder Metall noch eine Kreisform des Schellenkörpers sind zwingend. Der gelenkigen Verbindung gegenüber weist der Schellenkörper der bekannten Rohrschelle eine Öffnung zum Einlegen eines Rohrs auf. Enden des Schellenkörpers beiderseits der Öffnung, die die Öffnung begrenzen, stehen vom Schellenkörper nach außen ab. Die Öffnung der Rohrschelle ist mit einer Schraube schließbar und die Enden des Schellenkörpers sind mit der Schraube zusammenziehbar, um ein eingelegtes Rohr in der Rohrschelle festzuspannen.

Das eine Ende des Schellenkörpers weist einen außen offenen Schlitz auf, in den die Schraube von außen einführbar ist, so dass ein Schraubenkopf das andere, den Schlitz aufweisende Ende des Schellenkörpers übergreift. Die Schraube durchgreift das andere, nach außen stehende Ende des Schellenkörpers der bekannten Rohrschelle. Am anderen Ende weist die bekannte Rohrschelle ein Gewindeelement mit einem Innengewinde auf, in das die Schraube eingeschraubt ist. Das Gewindeelement ist auf einer dem einen Ende des Schellenkörpers abgewandten Seite des anderen Endes des Schellenkörpers angeordnet, es ist schwenkbar am anderen Ende des Schellenkörpers angelenkt, so dass die Schraube mit dem Schraubenkopf nach außen schwenkbar ist. Die Schraube lässt sich so weit nach außen schwenken, dass ihr Schraubenkopf sich außerhalb des einen, den Schlitz aufweisenden Endes des Schellenkörpers befindet.

Zum Schließen der Rohrschelle werden die beiden Enden des Schellenkörpers einander genähert. Der Schraubenkopf stößt gegen das eine, den Schlitz aufweisende Ende des Schellenkörpers und wird von diesem nach außen gedrückt. Die in das schwenkbare Gewindeelement eingeschraubte Schraube schwenkt nach außen, so dass das eine, den Schlitz aufweisende Ende des Schellenkörpers innen am Schraubenkopf vorbeitritt. Anschließend schwenkt die Schraube nach innen in den Schlitz, so dass der Schraubenkopf das eine, den Schlitz aufweisende Ende des Schellenkörpers übergreift. Die Rohrschelle ist provisorisch geschlossen und kann durch Festziehen der Schraube gespannt werden. Eine Federwirkung, die die nach außen geschwenkte Schraube nach innen in den Schlitz im einen Ende des Schellenkörpers schwenkt, erzielt die bekannte Rohrschelle durch eine gummielastische Einlage an ihrem Schellenkörper, an der sich das Gewindeelement abstützt.

Aufgabe der Erfindung ist es, den erläuterten Schließmechanismus zu vereinfachen.

Diese Aufgabe wird erfindungsgemäß durch die Merkmale des Anspruchs 1 gelöst. Wie bei der bekannten Rohrschelle weist das eine Ende des Schellenkörpers der erfindungsgemäßen Rohrschelle einen an einem Ende offenen Schlitz auf. Der Schlitz muss nicht zwingend nach außen verlaufen, die Schraube kann auch seitlich, d.h. achsparallel zur Rohrschelle, schwenken und der Schlitz achsparallel verlaufen und seitlich offen sein. Das andere Ende des Schellenkörpers der erfindungsgemäßen Rohrschelle weist ein Schraubenloch auf, in das eine Schraube eingeschraubt ist. Die Schraube ist im Schraubenloch in Längsrichtung des Schlitzes im einen Ende des Schellenkörpers soweit schwenkbar, dass sie ohne sie auszuschrauben durch das offene Ende in den Schlitz hinein und aus dem Schlitz heraus bewegbar ist. Die Schwenkbarkeit der Schraube kann beispielsweise durch die Form des Schraubenlochs, die Größe des Schraubenlochs in Bezug auf die Schraube und/oder die Kürze des Schraubenlochs in axialer Richtung, d.h. eine Materialdicke des das Schraubenloch aufweisenden Endes des Schellenkörpers der Rohrschelle erreicht werden. Die Schraube ist vorzugsweise eine Blechschraube insbesondere mit einem Grobgewinde.

Die Erfindung hat den Vorteil, dass sie kein schwenkbares Gewindeelement benötigt, in das die Schraube eingeschraubt ist, die Schraube ist ohne bewegliches Teil im Schraubenloch im anderen Ende des Schellenkörpers schwenkbar. Auch eine gummielastische Einlage zur Erzielung einer Federelastizität ist verzichtbar. Die Schraube der erfindungsgemäßen Rohrschelle überwindet beim Schließen der Rohrschelle wie bei der bekannten Rohrschelle das eine, den Schlitz aufweisende, nach außen stehende Ende des Schellenkörpers und schwenkt in den Schlitz hinein, so dass der Schraubenkopf das Ende des Schellenkörpers übergreift. Die Rohrschelle lässt sich durch Zusammendrücken von Hand ohne Werkzeug schließen, so dass ein in sie eingelegtes Rohr gehalten ist. Erst zum Anziehen der Schraube und Festspannen des Rohrs in der Rohrschelle ist ein Schraubendreher notwendig. Ein weiterer Vorteil der Erfindung ist, dass das Schraubenloch gewindelos sein kann oder die Schraube ein Gewinde selbst schneidet. Es entfällt dadurch der Aufwand für die Gewindeherstellung.

In bevorzugter Ausgestaltung der Erfindung beaufschlagt das andere, das Schraubenloch aufweisende Ende des Schellenkörpers die eingeschraubte Schraube elastisch oder federnd in Richtung eines geschlossenen Endes des Schlitzes im einen Ende des Schellenkörpers, wenn die Schraube aus dem Schlitz herausgeschwenkt ist. Dadurch wird erreicht, dass die Schraube beim Schließen der Rohrschelle von selbst in den Schlitz eintritt und die Rohrschelle provisorisch schließt.

Eine Ausgestaltung der Erfindung sieht eine Sicke am anderen, das Schraubenloch aufweisenden Ende des Schellenkörpers vor. Die Sicke verläuft parallel zum Schlitz im einen Ende des Schellenkörpers, ihre Hohlseite ist dem den Schlitz aufweisenden Ende des Schellenkörpers zugewandt. Die Sicke beginnt am Schraubenloch oder überquert es. Die Sicke bewirkt eine gewisse Führung der Schraube in der gewünschten Schwenkrichtung, d.h. in Richtung des Schlitzes im einen Ende des Schellenkörpers. Auch kann mit der Sicke die gewünschte Federwirkung zum Schwenken der Schraube in den Schlitz hinein beim Schließen der Rohrschelle erreicht werden.

Die Erfindung wird nachfolgend anhand eines in der Zeichnung dargestellten Ausführungsbeispiels näher erläutert. Es zeigen:
- Figur 1: eine erfindungsgemäße Rohrschelle in Seitenansicht;
- Figur.2: die Rohrschelle in einer um 90° gedrehten Darstellung gemäß Pfeil II in Figur 1; und
- Figuren 3 und 4: die Darstellung einer Einzelheit gemäß Pfeil II in Figur 1 beim Schließen der Rohrschelle.

Die in der Zeichnung dargestellte, erfindungsgemäße Rohrschelle 1 weist einen Schellenkörper 2 auf, der aus zwei Schellenbügeln 3, 4 besteht, die an einer Stelle ineinander eingehängt und dadurch gelenkig miteinander verbunden sind. Die Einhängestelle bildet ein Gelenk 5 der Schellenbügel 3, 4 der Rohrschelle 1. Die beiden Schellenbügel 3, 4 erstrecken sich über jeweils etwas weniger als einen Halbkreisbogen in Umfangsrichtung. Die Schellenbügel 3, 4 sind aus Blechstreifen gebogen. Dem Gelenk 5 gegenüber sind die Enden 6, 7 der Schellenbügel 3, 4 radial zum Schellenkörper 2 oder parallel zueinander nach außen stehend gebogen. Die Enden 6, 7 begrenzen eine Öffnung zum Einlegen eines nicht dargestellten Rohrs in die Rohrschelle 1.

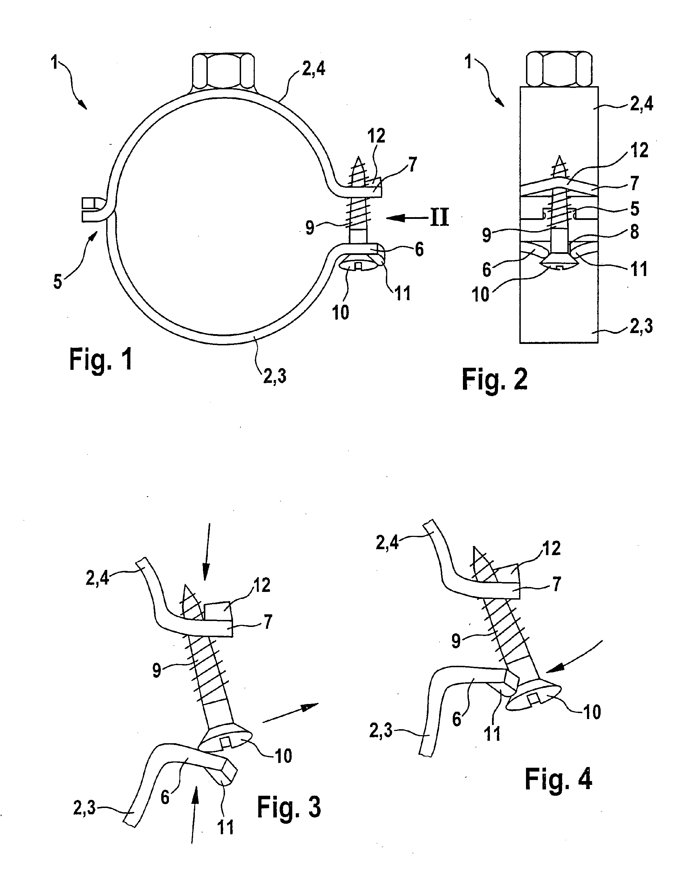

Zum Verständnis der Figur 2 wird angemerkt, dass sich das dort sichtbare Gelenk 5 um den Durchmesser der Rohrschelle 1 hinter der Schraube 9 befindet, wie ein Vergleich mit Figur 1 zeigt.

Das eine nach außen stehende Ende 6 des Schellenkörpers 2 weist einen radial nach außen verlaufenden und außen offenen Schlitz 8 auf, der von einer Schraube 9 durchgriffen wird. Ein Schraubenkopf 10 befindet sich auf einer dem anderen Ende 7 abgewandten Außenseite des einen Endes 6 des Schellenkörpers 2. Ecken des einen Endes 6 an Rändern des Schlitzes 8 an dessen äußerem, offenen Ende sind zu Fanghaken 11 zur Außenseite des Endes 6 gebogen.

Das andere nach außen stehende Ende 7 des anderen Schellenbügels 4 bzw. des Schellenkörpers 2 weist ein Schraubenloch auf, in das die Schraube 9 eingeschraubt ist. Die Schraube 9 ist eine Blechschraube mit Grobgewinde. Die Schraube 9 weist Spiel im Schraubenloch auf, so dass sie in Längsrichtung des Schlitzes 8 und der Schraubenkopf 10 nach außen schwenkbar ist. Das Schraubenloch kann eine von der Kreisform abweichende, geringfügig längliche Form aufweisen. Am Schraubenloch beginnend weist das andere Ende 7 des Schellenkörpers 2 eine sich nach außen, d.h. in Längsrichtung des Schlitzes erstreckende Sicke 12 auf. Wie in Figur 2 erkennbar ist die Sicke 12 durch Formung des anderen Endes 7 zu einer Art Satteldach gebildet. Eine Hohlseite der Sicke 12 ist dem einen Ende 6 zugewandt. Die Sicke 12 ermöglicht das Schwenken der Schraube 9 mit dem Schraubenkopf 12 nach außen.

Zum Schließen der Rohrschelle 1 werden die Enden 6, 7 des Schellenkörpers 2 aufeinander zu bewegt. Wie in Figur 3 zu sehen stößt das den Schlitz 8 aufweisende eine Ende 6 gegen den Schraubenkopf 10 und drückt diesen nach außen. Die Schraube 9 verschwenkt dabei. Beim weiteren Zusammendrücken der Enden 6, 7 tritt der Schraubenkopf 10 außen an dem den Schlitz 8 aufweisenden einen Ende 6 des Schellenkörpers 2 vorbei, wie es in Figur 3 zu sehen ist. Anschließend schwenkt die Schraube 9 wieder nach innen (Figur 4) und gelangt so in den außen offenen Schlitz 8, der Schraubenkopf 10 übergreift das den Schlitz 8 aufweisende eine Ende 6 des Schellenkörpers 2, wie in Figur 1 dargestellt. Ein in die Rohrschelle 1 eingelegtes, nicht dargestelltes Rohr ist provisorisch in der Rohrschelle 1 gehalten und kann durch Anziehen der Schraube 9 in der Rohrschelle 1 festgespannt werden.

Zum provisorischen Schließen der Rohrschelle 1 ist kein Werkzeug erforderlich, es müssen lediglich die beiden Enden 6, 7 des Schellenkörpers 2 aufeinander zu bewegt werden. Dadurch hat ein Monteur eine Hand zum Halten des einzulegenden Rohrs frei. Das Schwenken der Schraube 9 nach innen in den Schlitz 8 erfolgt durch Beaufschlagung durch das das Schraubenloch aufweisende andere Ende 7 und/oder die Fanghaken 11, wenn das den Schlitz 8 aufweisende eine Ende 6 des Schellenkörpers 2 den Schraubenkopf 10 untergreift und wieder vom anderen Ende 7 entfernt wird.

## Patentansprüche

1. Rohrschelle, mit einem ringförmigen Schellenkörper, der eine Öffnung zum Einlegen eines Rohrs an einer Stelle seines Umfangs aufweist, wobei die Öffnung begrenzende Enden (6, 7) des Schellenkörpers (2) nach außen stehen und wobei ein Ende (6) des Schellenkörpers (2) einen an einem Ende offenen Schlitz (8) aufweist, **dadurch gekennzeichnet, dass** das andere Ende (7) des Schellenkörpers (2) ein Schraubenloch aufweist, in das eine Schraube (9) eingeschraubt ist, die im Schraubenloch im anderen Ende (7) des Schellenkörpers (2) in Längsrichtung des Schlitzes (8) im einen Ende (6) des Schellenkörpers (2) so weit schwenkbar ist, dass sie ohne sie auszuschrauben durch das offene Ende in den Schlitz (8) hinein und aus dem Schlitz (8) heraus bewegbar ist.

2. Rohrschelle nach Anspruch 1, **dadurch gekennzeichnet, dass** das andere, das Schraubenloch aufweisende Ende (7) des Schellenkörpers (2) die eingeschraubte Schraube (9) in Richtung eines geschlossenen Endes des Schlitzes (8) im einen Ende (6) des Schellenkörpers (2) beaufschlagt, wenn die Schraube (9) aus dem Schlitz (8) heraus geschwenkt ist.

3. Rohrschelle nach Anspruch 1, **dadurch gekennzeichnet, dass** das andere, das Schraubenloch aufweisende Ende (7) des Schellenkörpers (2) eine Sicke (12) aufweist, die parallel zum Schlitz (8) im einen Ende (6) des Schellenkörpers (2) verläuft, deren Hohlseite dem Schlitz (8) zugewandt ist und die vom Schraubenloch ausgeht oder das Schraubenloch überquert.
